# EUROPÄISCHE PATENTANMELDUNG

(11) **EP 2 546 044 A1**
(43) Veröffentlichungstag der Anmeldung: **16.01.2013**
(21) Anmeldenummer: 12176364.3
(22) Anmeldetag: 13.07.2012
(51) Int. Cl.: B29C 47/20, B29C 47/08, B29C 47/92

(54) **Rohrextrusionsvorrichtung und Verfahren zum Extrudieren von Kunststoffrohren**

(30) Priorität: 13.07.2011 DE 102011079070
(71) Anmelder: Wavin B.V., 8011 CW Zwolle (NL)
(72) Erfinder: Bobke, Holger, 39435 Egeln (DE)
(74) Vertreter: HOFFMANN EITLE

(57) **Zusammenfassung**

Eine Vorrichtung und ein Verfahren zum Extrudieren von Kunststoffrohren. Die Vorrichtung weist einen Rohrkopf mit einer Düse (25) und einem Dorn (20) auf, die zusammen einem ringförmigen Austrittsspalt (24) definieren, aus dem das extrudierte Kunststoffrohr mit einem bestimmten Austrittsmaß austritt. Ein Werkzeugvorsatz (10) ist in Förderrichtung des extrudierten Kunststoffmaterials anschließend an den Austrittsspalt(24) des Rohrkopfes anordenbar und so gestaltet, dass er den Außendurchmesser des rohrförmigen Materialstrangs bezüglich des Austrittsmaßes vergrößert.

## Beschreibung

### Technisches Gebiet

Die vorliegende Erfindung betrifft einen Werkzeugvorsatz für eine Vorrichtung zum Extrudieren von Kunststoffrohren. Die vorliegende Erfindung betrifft auch einen Rohrkopf mit einem solchen Werkzeugvorsatz, eine Rohrextrusionsvorrichtung sowie ein Verfahren zum Extrudieren von Kunststoffrohren.

### Stand der Technik

Bei der Produktion von Kunststoffprofilen wie z.B. Kunststoffrohren in einer Extrusionslinie wird ein thermoplastischer Kunststoff in Granulat- oder Pulverform einer Extrudereinheit zugeführt. In dieser wird das Granulat bzw. Pulver erwärmt, geknetet und plastifiziert. Anschließend wird der Kunststoff als formbare Masse durch eine Extruderschnecke in einen Rohrkopf gefördert und dort durch einen ringförmigen Austrittsspalt gedrückt.

Anschließend wird das Kunststoffrohr durch eine Kalibriereinheit gezogen, die eine Kalibrierhülse aufweist, mit der das Rohr auf einem vom Austrittsmaß verschiedenen, vorbestimmten Außendurchmesser gebracht werden kann. Bis vor einiger Zeit war es dabei notwendig, für unterschiedliche Wanddicken oder Außendurchmesser der Rohre verschiedene Kalibriereinrichtungen zur Verfügung zu stellen. Die Produktion von Rohren mit verschiedenen Dimensionen erforderte daher ein Umrüsten und dementsprechend ein Stillsetzen der Maschine, was zu Ausfallzeiten führte.

Mittlerweile gibt es aber Kalibrierhülsen, die im Durchmesser einstellbar sind, so dass Rohre mit unterschiedlichen Abmaßen (SDR - Standard Dimension Ratio, Außendurchmesser geteilt durch Wanddicke) produziert werden können, ohne den Extruder anzuhalten.

In der Praxis führt dies jedoch dazu, dass es zumindest bei bestimmten kritischen Verhältnissen zwischen den Abmaßen des Materialstrangs beim Austritt aus dem Rohrkopf und den veränderten Abmaßen des Materialstrangs in der Kalibrierung zu einem übermäßigen Verziehen des Materials am Austritt aus dem Düsenspalt kommt. Im Düsenspalt entsteht dann ein Luftspalt. Dies führt zu Beeinträchtigungen in der Qualität der Rohroberfläche, Ablagerungen im Düsenspalt, und unkontrollierten Ablösungen.

Bisher wurde in solchen Fällen der Düseneinsatz oder Dorn des Rohrkopfes gewechselt, um den Düsenspalt besser an die Rohrwandstärke anzupassen. Der Wechsel des Dorns führt aber wiederum zu unerwünschten Stillstandszeiten, die durch die verstellbare Kalibrierung gerade verhindert worden waren.

### Darstellung der Erfindung

Der vorliegenden Erfindung liegt die Aufgabe zugrunde, eine Vorrichtung zum Extrudieren von Kunststoffrohren so weiterzubilden, dass das Verziehen des Materials am Austritt aus dem Düsenspalt und die damit verbundenen Beeinträchtigungen der Rohroberfläche weniger stark oder gar nicht mehr auftreten.

Diese Aufgabe löst ein Werkzeugvorsatz für eine Vorrichtung zum Extrudieren von Kunststoffrohren mit den Merkmalen des Patentanspruchs 1, ein Rohrkopf für eine solche Extrusionsvorrichtung mit den Merkmalen des Patentanspruchs 10, eine Rohrextrusionsvorrichtung mit den Merkmalen des Patentanspruchs 16 sowie ein Verfahren zum Extrudieren von Kunststoffrohren mit den Merkmalen des Patentanspruchs 17.

Der Werkzeugvorsatz gemäß dem Patentanspruch 1 ist vorgesehen für eine Vorrichtung zum Extrudieren von Kunststoffrohren, welche Vorrichtung einen Rohrkopf mit einer Düse und einem Dorn aufweist, die zusammen einem ringförmigen Austrittsspalt definieren, aus dem das extrudierte Kunststoffrohr mit einem bestimmten Austrittsmaß austritt. Der Werkzeugvorsatz in Förderrichtung des extrudierten Kunststoffmaterials anschließend an den Austrittsspalt des Rohrkopfes anordenbar und so gestaltet, dass er den Außendurchmesser des rohrförmigen Materialstrangs bezüglich des Austrittsmaßes vergrößert.

Um das Freiziehen des Materialaustrittsspalts zu verhindern, wird erfindungsgemäß somit ein Werkzeugvorsatz am Rohrkopf vorgesehen. Dadurch wird der Materialstrang vom Austrittsspalt aus nicht unmittelbar zur Kalibrierung geführt und somit im Durchmesser verkleinert. Vielmehr wird der Durchmesser des rohrförmigen Materialstrangs unmittelbar anschließend an den Austrittsspalt zunächst vergrößert, bevor der Materialstrang zur Kalibrierung gezogen wird.

Ein Verziehen des Materials im Düsenspalt wird so verhindert. Mittels ein und demselben Dorn und einer verstellbaren Kalibrierung können nun Kunststoffrohre mit verschiedenen Durchmessern ohne Einbußen in der Qualität produziert werden.

Bevorzugte optionale Merkmale finden sich in den abhängigen Patentansprüchen.

Der Werkzeugvorsatz kann einteilig oder zweiteilig ausgestaltet sein. In jedem Fall umfasst er vorzugsweise einen Dornvorsatz, welcher an der Stirnseite des Dorns des Rohrkopfes anordenbar ist und vorzugsweise im wesentlichen zylindrisch ausgestaltet ist. Der Dornvorsatz weist bevorzugt an seinem dem Dorn abgewandten Ende einen Bereich mit vergrößertem Außendurchmesser auf, der für die Aufweitung des Durchmessers des extrudierten Materialstrangs sorgt.

Zusätzlich kann als zweiter Bestandteil des erfindungsgemäßen Werkzeugvorsatzes ein Außenvorsatz vorgesehen sein, der an der Stirnseite der Düse des Rohrkopfes anordenbar ist und vorzugsweise im wesentlichen ringförmig ausgestaltet ist.

Der Dornvorsatz und ggf. der Außenvorsatz werden über geeignete Befestigungsmittel wie z.B. Schrauben an der Stirnseite des Dorns bzw. der Düse des Rohrkopfes befestigt. Dies geschieht vorzugsweise so, dass der Dornvorsatz und ggf. der Außenvorsatz bezüglich des Dorns bzw. der Düse des Rohrkopfes zentriert werden. Der Dornvorsatz und ggf. der Außenvorsatz sind dabei vorzugsweise so bemessen, dass sie im Gebrauch konzentrisch mit dem Dorn und der Düse des Rohrkopfes angeordnet sind.

Besonders gute Ergebnisse lassen sich erzielen, wenn der Dornvorsatz und /oder der Außenvorsatz zumindest in Teilbereichen mit einer Antihaftbeschichtung versehen sind, z.B. aus PTFE.

Um die Erweiterung des Durchmessers des Materialstrangs bewerkstelligen zu können, hat es sich als vorteilhaft erwiesen, wenn eine axiale Länge des Dornvorsatzes größer ist als eine axiale Länge des Außenvorsatzes. Der Dornvorsatz steht dann in axialer Richtung nach außerhalb des Außenvorsatzes hervor. Der Bereich des Dornvorsatzes mit dem vergrößerten Durchmesser befindet sich dabei vorzugsweise axial außerhalb des Außenvorsatzes.

Der erfindungsgemäße Rohrkopf für eine Vorrichtung zum Extrudieren von Kunststoffrohren weist eine Düse und einen Dorn auf, die zusammen einem ringförmigen Austrittsspalt definieren, aus dem das extrudierte Kunststoffrohr mit einem bestimmten Austrittsmaß austritt. In Förderrichtung des extrudierten Kunststoffmaterials ist anschließend an den Austrittsspalt des Rohrkopfes ein erfindungsgemäßer Werkzeugvorsatz angeordnet ist.

Der Dornvorsatz des Werkzeugvorsatzes ist im wesentlichen zylindrisch ausgestaltet und hat zumindest dort, wo er an den Dorn angrenzt, denselben Außendurchmesser wie der Dorn. So wird gewährleistet, dass der Dornvorsatz sich stufenlos an den Austrittsspalt des Rohrkopfes anschließt.

Der Dornvorsatz weist an seinem dem Dorn abgewandten Ende den Bereich mit vergrößertem Außendurchmesser auf, der größer ist als ein Außendurchmesser des Dorns im Bereich des Austrittsspaltes. Der extrudierte Materialstrang wird dann in seinem Durchmesser erweitert, indem er an der Außenfläche des Dornvorsatzes vorbei gezogen wird.

Der Außenvorsatz ist wie gesagt im wesentlichen ringförmig ausgestaltet. Er hat zumindest dort, wo er an die Düse angrenzt, denselben Innendurchmesser wie die Düse. So wird gewährleistet, dass der Außenvorsatz sich stufenlos an den Austrittsspalt des Rohrkopfes anschließt.

Der Außenvorsatz kann einen konstanten Innendurchmesser gleich dem Innendurchmesser der Düse haben. Der durch Dornvorsatz und Außenvorsatz gebildete Spalt führt dann den durch Düse und Dorn definierten Austrittsspalt unverändert fort.

Alternativ kann der Außenvorsatz an seinem der Düse abgewandten Ende einen vergrößerten Innendurchmesser aufweisen, der größer ist als der Innendurchmesser der Düse im Bereich des Austrittsspaltes. Der extrudierte Materialstrang wird dann bereits beim Durchlaufen des zwischen Außenvorsatz und Dornvorsatz definierten Spaltes im Durchmesser aufgeweitet. Alternativ wäre es auch möglich, dass der Außenvorsatz an seinem der Düse abgewandten Ende einen vergrößerten Innendurchmesser aufweist, der kleiner ist als der Innendurchmesser der Düse im Bereich des Austrittsspaltes. Der extrudierte Materialstrang würde dann bereits beim Durchlaufen des zwischen Außenvorsatz und Dornvorsatz definierten Spaltes im Durchmesser zunächst verringert.

Der eben beschriebene Rohrkopf kann schließlich Teil einer Vorrichtung zum Extrudieren von Kunststoffrohren sein, die außerdem eine Kalibriereinheit aufweist, mit der das extrudierte Rohr auf einem vom Austrittsmaß verschiedenen, vorbestimmten Außendurchmesser gebracht werden kann. Der Werkzeugvorsatz ist dann in Förderrichtung des Kunststoffrohres anschließend an den Austrittsspalt des Rohrkopfes und vor der Kalibriereinheit angeordnet.

Im erfindungsgemäßen Verfahren zum Extrudieren von Kunststoffrohren schließlich tritt ein extrudiertes Kunststoffrohr aus einem durch eine Düse und einen Dorn definierten Austrittsspalt mit einem bestimmten Austrittsmaß aus. Der Außendurchmesser des rohrförmigen Materialstrangs wird anschließend an den Austrittsspalt bezüglich des Austrittsmaßes vergrößert. Dies kann mittels eines Werkzeugvorsatzes der oben beschriebenen Art oder auch auf andere Art und Weise geschehen.

Für das Kunststoffrohr kann an sich jeder extrudierbare Kunststoff verwendet werden. Als besonders geeignet haben sich PE-Materialien, insbesondere HDPE-Materialien, herausgestellt.

### Kurze Beschreibung der Zeichnungen

Figur 1 zeigt einen Rohrkopf einer Vorrichtung zum Extrudieren von Kunststoffrohren mit einem Werkzeugvorsatz gemäß der vorliegenden Erfindung.
Figur 2 zeigt die einzelnen Bestandteile des Rohrkopfes mit dem Werkzeugvorsatz.
Figur 3 ist eine Detailansicht eines Dornvorsatzes des Werkzeugvorsatzes.
Figur 4 zeigt den Rohrkopf der Figuren 1 bis 3 beim Extrudieren eines Kunststoffrohres.
Figur 5 zeigt einen Rohrkopf aus dem Stand der Technik beim Extrudieren eines Kunststoffrohres.

Ausführliche Beschreibung einer bevorzugten Ausführungsform der Erfindung

Eine bevorzugte Ausführungsform eines Werkzeugvorsatzes für eine Rohrextrusionsvorrichtung gemäß der vorliegenden Erfindung wird nun mit Bezug auf die anliegenden Zeichnungen beschrieben.

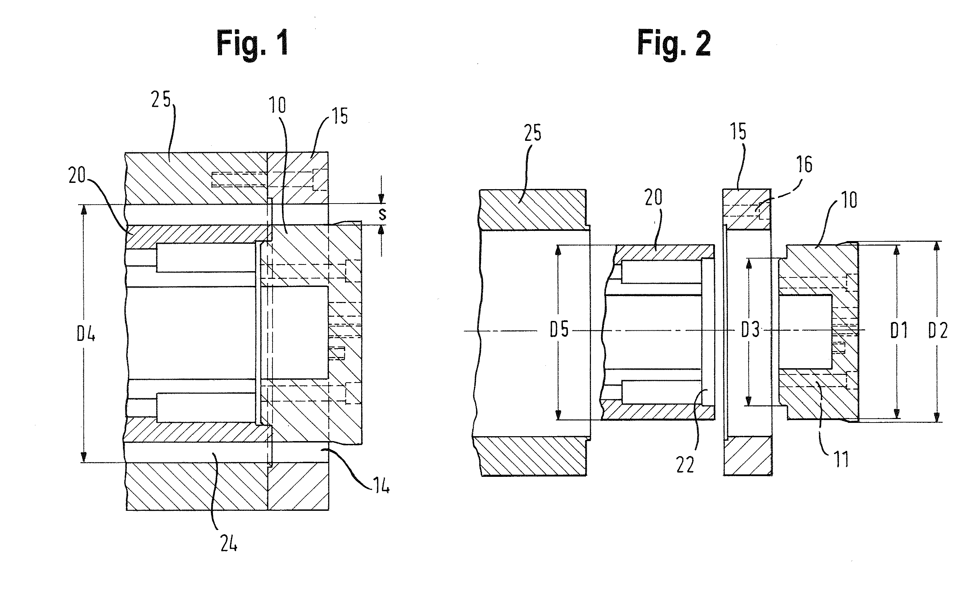

Figur 1 zeigt einen Rohrkopf einer Vorrichtung zum Extrudieren von Kunststoffrohren mit einem Werkzeugvorsatz gemäß der vorliegenden Erfindung. Figur 2 zeigt die einzelnen Bestandteile des Rohrkopfes mit dem Werkzeugvorsatz.

Der Rohrkopf der Figuren 1 und 2 ist Teil einer Rohrextrusionsanlage. Solche Anlagen beinhalten gängigerweise einen Extruder, in den das Rohrausgangsmaterial eingefüllt, aufgeschmolzen und am Ende abgegeben wird. Die im Extruder erzeugte Schmelze durchläuft anschließend ein Rohrwerkzeug, in dem es in die erforderliche Rohrform gebracht wird. Der Rohrkopf ist Teil dieses Rohrwerkzeugs. Er definiert einen ringförmigen Austrittsspalt, aus dem das extrudierte Kunststoffrohr mit einem bestimmten Austrittsmaß austritt.

Anschließend wird das Kunststoffrohr zur endgültigen Formgebung durch eine Kalibriereinheit gezogen, die einen Vakuumtank mit einer an dessen Eingang angeordneten Kalibrierhülse aufweist. Diese Kalibrierhülse ist stufenlos im Durchmesser einstellbar, so dass das extrudierte, noch formbare Rohr auf einem vom Austrittsmaß verschiedenen, vorbestimmten Außendurchmesser gebracht werden kann.

Zumindest bei bestimmten kritischen Verhältnissen zwischen den Abmaßen des Materialstrangs beim Austritt aus dem Rohrkopf und den veränderten Abmaßen des Materialstrangs kann es in der Kalibrierung zu einem übermäßigen Verziehen des Materials am Austritt aus dem Düsenspalt kommen. Im Düsenspalt entsteht dann ein Luftspalt. Dies führt zu Beeinträchtigungen in der Qualität der Rohroberfläche, Ablagerungen im Düsenspalt, und unkontrollierten Ablösungen.

Der Rohrkopf der vorliegenden Erfindung weist nun einen Werkzeugvorsatz auf, mit dem sich die Probleme am Austrittsspalt beheben lassen.

Die Figuren 1 und 2 zeigen eine bevorzugte Ausführungsform eines Rohrkopfes gemäß der vorliegenden Erfindung.

Der Rohrkopf an sich ist wie im Stand der Technik ausgestaltet und umfasst im wesentlichen eine Düse 25 und einen konzentrisch darin angeordneten Dorn 20, die zusammen einen ringförmigen Austrittsspalt 24 mit der Spaltbreite "s" für das extrudierte Rohr (hier nicht gezeigt) bilden.

Der Werkzeugvorsatz ist in dieser Ausführungsform zweiteilig ausgestaltet. Er umfasst einerseits einen Dornvorsatz 10, der an die Stirnseite des Dorns 20 des Rohrkopfes gesetzt wird. Die Befestigung an dem Dorn 20 erfolgt mittels Schrauben; der Dornvorsatz 10 weist entsprechende durchgehende Bohrlöcher 11 auf.

Der Dornvorsatz 10 ist im wesentlichen zylinderförmig ausgestaltet und hat in seinem mittleren Bereich einen Durchmesser D1. Zum Ende hin vergrößert sich der Durchmesser auf einen Durchmesser D2. Am anderen Ende ist ein Bereich mit reduziertem Durchmesser D3 ausgebildet, wobei dieser Durchmesser D3 dem Innendurchmesser einer Aufnahmeöffnung 22 im Dorn entspricht. So kann der Dornvorsatz 10 mit diesem Bereich mit dem Durchmesser D3 in die Aufnahmeöffnung 22 in der Stirnseite des Dorns 20 eingesetzt und gleichzeitig zentriert werden.

Andererseits umfasst der Werkzeugvorsatz auch einen Außenvorsatz 15, der an die Stirnseite der Düse 25 des Rohrkopfes angesetzt wird. Die Befestigung des Außenvorsatzes an der Düse 25 erfolgt mittels Schrauben; der Außenvorsatz 15 weist entsprechende durchgehende Bohrlöcher 16 auf. Der Außenvorsatz ist ringförmig ausgestaltet und hat einen konstanten Innendurchmesser D4, der dem Innendurchmesser der Düse entspricht. Der Innenumfang des Außenvorsatzes 15 mit dem Innendurchmesser D4 und der Bereich des Dorns 10 mit dem Durchmesser D1 führen so den Austrittsspalt fort, ohne dessen Spaltbreite "s" zu verändern.

Der Bereich des Dornvorsatzes 10 mit dem Durchmesser D1 erstreckt sich dabei axial aus dem Außenvorsatz 15 heraus. Erst anschließend folgt der Bereich mit dem erweiterten Durchmesser D2.

Der Innenumfang des Außenvorsatzes 15 und der Außenumfang des Dornvorsatzes 10 bilden einen ringförmigen Spalt 14, der sich an den Austrittsspalt 24 des Rohrkopfes anschließt und diesen verlängert.

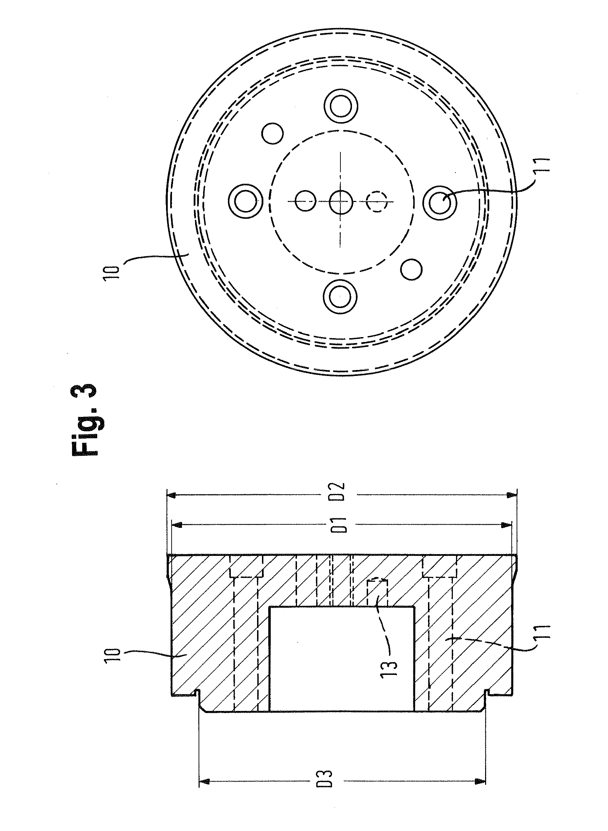

Die Figur 3 ist eine Detailansicht eines Dornvorsatzes des Werkzeugvorsatzes. Aus dieser Ansicht ergibt sich auch die Verteilung der Bohrungen 11 um den Außenumfang des Dornvorsatzes 10 herum. Das Bezugszeichen 13 bezeichnet eine Fühlerbohrung.

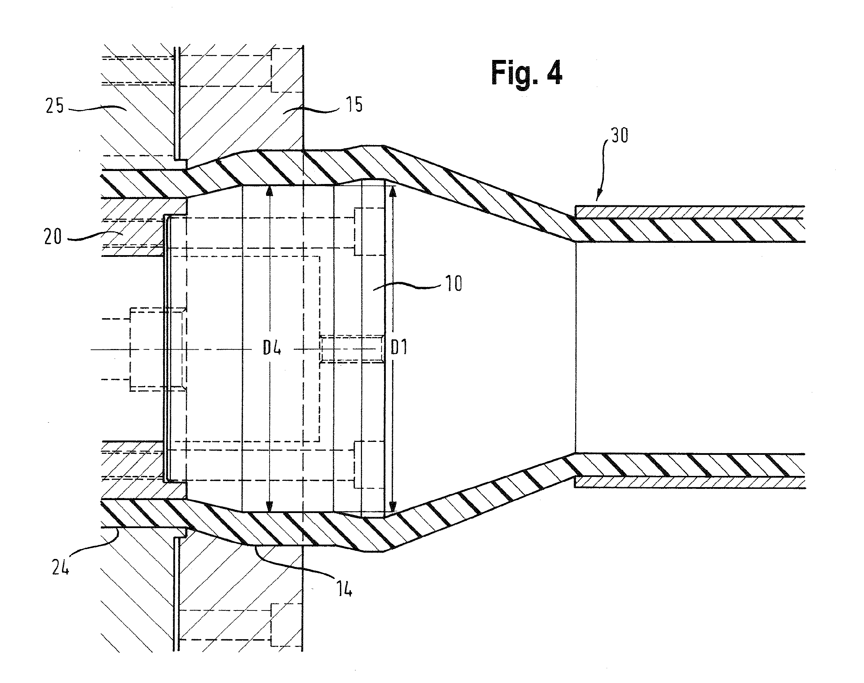

Die Figur 4 zeigt die Funktionsweise eines Werkzeugvorsatzes gemäß einer leicht veränderten Ausführungsform der vorliegenden Erfindung. Hier sind Dornvorsatz 10 und Außenvorsatz 15 so gestaltet, dass der durch sie gebildete Spalt 14 den Durchmesser des Materialstrangs bereits vergrößert. Dazu vergrößert sich der Innendurchmesser des Außenvorsatzes 15 ausgehend von der Stirnseite des Rohrkopfes zunächst kontinuierlich, um dann in einen Bereich mit konstantem Durchmesser D4 überzugehen. Die Außenfläche des Dornvorsatzes 10 weist einen komplementär dazu ausgestalteten, sich erweiternden Bereich auf, der in einen Bereich mit konstantem Durchmesser D1 übergeht, an den sich dann wie in der ersten Ausführungsform der Bereich mit dem weiter vergrößerten Durchmesser D2 anschließt.

Es wird deutlich, dass der extrudierte, rohrförmige Materialstrang den durch Düse und Dorn gebildeten Austrittsspalt oder Düsenspalt 24 verläßt und anschließend den durch Außenvorsatz und Dornvorsatz gebildeten Spalt 14 passiert. Dabei werden Außen- und Innenumfang des rohrförmigen Materialstrangs bereits vergrößert. Nach Verlassen des Spaltes 14 zwischen den beiden Teilen des Werkzeugvorsatzes schließt sich in Materialflußrichtung auch hier der Bereich des Dornvorsatzes mit dem vergrößerten Durchmesser D2 an. Der Materialstrang wird über diese Durchmessererweiterung D2 hinüber geführt, bevor er sich weiter in Richtung Kalibrierung 30 bewegt. Der Außendurchmesser des rohrförmigen Materialstrangs wird bezüglich seines Austrittsmaßes am Austrittsspalt daher mittels des Werkzeugvorsatzes zunächst vergrößert, bevor er mittels der Kalibrierung 30 auf den vorbestimmten Außendurchmesser gebracht bzw. vermindert wird.

Der erfindungsgemäße Werkzeugvorsatz bildet dadurch eine Zugentlastung für den Austrittsspalt.

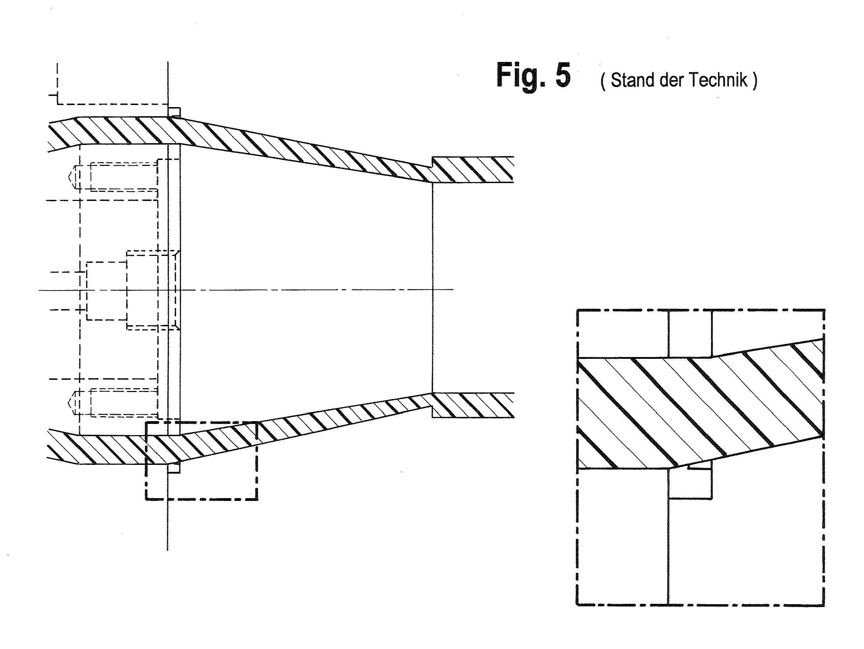

Figur 5 zeigt dagegen die Arbeitsweise eines Rohrkopfes aus dem Stand der Technik ohne erfindungsgemäßen Werkzeugvorsatz. Es wird deutlich, dass das Material beim Verlassen des durch Düse und Dorn gebildeten Austrittsspaltes 24 stark verzogen wird. Im Düsenspalt entsteht dann ein Luftspalt. Dies führt zu Beeinträchtigungen in der Qualität der Rohroberfläche, Ablagerungen im Düsenspalt, und unkontrollierten Ablösungen.

Die Erfindung ist mit Bezug auf bevorzugte Ausführungsformen beschrieben worden. Die vorliegende Erfindung ist jedoch nicht auf diese bevorzugten Ausführungsformen beschränkt.

So weist der Werkzeugvorsatz gemäß den gerade diskutierten bevorzugten Ausführungsformen sowohl einen Dornvorsatz als auch einen Außenvorsatz auf. Die Erfindung deckt aber auch Ausgestaltungen ab, in denen der Werkzeugvorsatz allein aus dem Dornvorsatz besteht. Auch in diesem Fall vergrößert der Dornvorsatz den Durchmesser des rohrförmigen Materialstrangs verglichen mit dem Austrittsmaß. Wird der Außendurchmesser dann in Richtung der Kalibrierhülse wieder verringert, führt dies nicht zu einem übermäßigen Verziehen am Austrittsspalt, da das Material zuvor über den Dornvorsatz geführt wird.

Die Oberflächen des Werkzeugvorsatzes können darüber hinaus mit einer Antihaftbeschichtung versehen sein, z.B. aus PTFE. Diese Beschichtung wird insbesondere auf die Oberflächen im Bereich des ringförmigen Spalts 14 aufgebracht, die mit dem Kunststoffmaterial in Berührung gelangen, d.h. auf die Innenumfangsfläche des Außenvorsatzes 15 und/oder die Außenumfangsfläche des Dornvorsatzes 10. Sie kann aber auch auf beliebigen weiteren Oberflächen des Werkzeugvorsatzes Verwendung finden.

## Patentansprüche

1. Werkzeugvorsatz für eine Vorrichtung zum Extrudieren von Kunststoffrohren, welche Vorrichtung einen Rohrkopf mit einer Düse (25) und einem Dorn (20) aufweist, die zusammen einem ringförmigen Austrittsspalt (24) definieren, aus dem das extrudierte Kunststoffrohr mit einem bestimmten Austrittsmaß austritt,
wobei der Werkzeugvorsatz in Förderrichtung des extrudierten Kunststoffmaterials anschließend an den Austrittsspalt des Rohrkopfes anordenbar ist und so gestaltet ist, dass er den Außendurchmesser des rohrförmigen Materialstrangs bezüglich des Austrittsmaßes vergrößert.

2. Werkzeugvorsatz nach Patentanspruch 1, der einen Dornvorsatz (10) umfasst, welcher an der Stirnseite des Dorns (20) des Rohrkopfes anordenbar ist und vorzugsweise im wesentlichen zylindrisch ausgestaltet ist.

3. Werkzeugvorsatz nach Patentanspruch 2, bei welchem der Dornvorsatz an seinem dem Dorn abgewandten Ende einen Bereich mit vergrößertem Außendurchmesser (D2) aufweist.

4. Werkzeugvorsatz nach einem der Patentansprüche 2 und 3, weiter mit einem Außenvorsatz (15), der an der Stirnseite der Düse (25) des Rohrkopfes anordenbar ist und vorzugsweise im wesentlichen ringförmig ausgestaltet ist.

5. Werkzeugvorsatz nach einem der vorangehenden Patentansprüche, weiter mit Mitteln (11, 16) zum Befestigen des Dornvorsatzes und ggf. des Außenvorsatzes an der Stirnseite des Dorns bzw. der Düse des Rohrkopfes.

6. Werkzeugvorsatz nach einem der vorangehenden Patentansprüche, weiter mit Mitteln (D3) zum Zentrieren des Dornvorsatzes und ggf. des Außenvorsatzes bezüglich des Dorns bzw. der Düse des Rohrkopfes.

7. Werkzeugvorsatz nach einem der vorangehenden Patentansprüche, bei welchem der Dornvorsatz und ggf. der Außenvorsatz so bemessen sind, dass sie im Gebrauch konzentrisch mit dem Dorn und der Düse des Rohrkopfes angeordnet sind.

8. Werkzeugvorsatz nach einem der vorangehenden Patentansprüche, bei welchem der Dornvorsatz und /oder der Außenvorsatz zumindest in Teilbereichen mit einer Antihaftbeschichtung, beispielsweise aus PTFE, versehen sind.

9. Werkzeugvorsatz nach einem der Patentansprüche 4 bis 8, bei welchem eine axiale Länge des Dornvorsatzes größer ist als eine axiale Länge des Außenvorsatzes, und der Bereich des Dornvorsatzes (10) mit dem vergrößerten Außendurchmesser (D2) vorzugsweise axial außerhalb des Außenvorsatzes (15) vorgesehen ist.

10. Rohrkopf für eine Vorrichtung zum Extrudieren von Kunststoffrohren, welcher Rohrkopf eine Düse (25) und einen Dorn (20) aufweist, die zusammen einem ringförmigen Austrittsspalt (24) definieren, aus dem das extrudierte Kunststoffrohr mit einem bestimmten Austrittsmaß austritt,
**dadurch gekennzeichnet, dass**
in Förderrichtung des extrudierten Kunststoffmaterials anschließend an den Austrittsspalt des Rohrkopfes ein Werkzeugvorsatz gemäß einem der Patentansprüche 1 bis 9 angeordnet ist.

11. Rohrkopf nach Patentanspruch 10, bei welchem der Dornvorsatz (10) im wesentlichen zylindrisch ausgestaltet ist und zumindest dort, wo er an den Dorn angrenzt, denselben Außendurchmesser (D5) hat wie der Dorn.

12. Rohrkopf nach Patentanspruch 10 oder 11, bei welchem der Dornvorsatz an seinem dem Dorn abgewandten Ende den Bereich mit vergrößertem Außendurchmesser (D2) aufweist, der größer ist als ein Außendurchmesser (D5) des Dorns im Bereich des Austrittsspaltes.

13. Rohrkopf nach einem der Patentansprüche 10 bis 12, bei welchem der Außenvorsatz (15) im wesentlichen ringförmig ausgestaltet ist und zumindest dort, wo er an die Düse angrenzt, denselben Innendurchmesser (D4) hat wie die Düse (25).

14. Rohrkopf nach Patentanspruch 13, bei welchem der Außenvorsatz einen konstanten Innendurchmesser gleich dem Innendurchmesser der Düse hat.

15. Rohrkopf nach Patentanspruch 13, bei welchem der Außenvorsatz an seinem der Düse abgewandten Ende einen vergrößerten Innendurchmesser aufweist, der größer ist als der Innendurchmesser der Düse im Bereich des Austrittsspaltes.

16. Vorrichtung zum Extrudieren von Kunststoffrohren mit einem Rohrkopf nach einem der Patentansprüche 10 bis 15 und einer Kalibriereinheit (30), mit der das extrudierte Rohr auf einem vom Austrittsmaß verschiedenen, vorbestimmten Außendurchmesser gebracht werden kann,
wobei der Werkzeugvorsatz in Förderrichtung des Kunststoffrohres anschließend an den Austrittsspalt des Rohrkopfes und vor der Kalibriereinheit angeordnet ist.

17. Verfahren zum Extrudieren von Kunststoffrohren, bei welchem ein extrudiertes Kunststoffrohr aus einem durch eine Düse (25) und einen Dorn (20) definierten Austrittsspalt (24) mit einem bestimmten Austrittsmaß austritt,
**dadurch gekennzeichnet, dass**
der Außendurchmesser des rohrförmigen Materialstrangs anschließend an den Austrittsspalt bezüglich des Austrittsmaßes vergrößert wird.

18. Verfahren nach Anspruch 17, bei welchem das extrudierte Kunststoffrohr aus einem PE-Material, insbesondere einem HDPE-Material, besteht.
